Europäisches Patentamt

European Patent Office

Office européen des brevets

(11) Numéro de publication : **0 029 396**
**B1**

(12) **FASCICULE DE BREVET EUROPÉEN**

(45) Date de publication du fascicule du brevet :
09.03.83

(21) Numéro de dépôt : **80401658.2**

(22) Date de dépôt : **19.11.80**

(51) Int. Cl.³ : **F 16 K 7/07**

(54) **Vanne à commande par un organe obturateur constringent.**

(30) Priorité : **20.11.79 FR 7928560**

(43) Date de publication de la demande :
**27.05.81 Bulletin 81/21**

(45) Mention de la délivrance du brevet :
**09.03.83 Bulletin 83/10**

(84) Etats contractants désignés :
**BE DE GB**

(56) Documents cités :
**FR A 1 595 857**
**FR E 93 020**

(73) Titulaire : **Etablissement public dit: CHARBONNA-GES DE FRANCE**
**9, Avenue Percier**
**F-75008 Paris (FR)**

(72) Inventeur : **Blanpain, Guy**
**4, rue de Bufosse**
**F-60550 Verneuil-en Halatte (FR)**
Inventeur : **Grandfils, Pierre**
**11, rue Grandperrier**
**F-60460 Precy-Sur-Oise (FR)**

(74) Mandataire : **Ducas, Michel Louis Marie et al**
**Cabinet Boettcher 23, rue La Boétie**
**F-75008 Paris (FR)**

Jouve, 18, rue St-Denis, 75001 Paris, France

Vanne à commande par un organe obturateur constringent

L'invention a pour objet une vanne de commande et/ou de sûreté par un organe obturateur constringent.

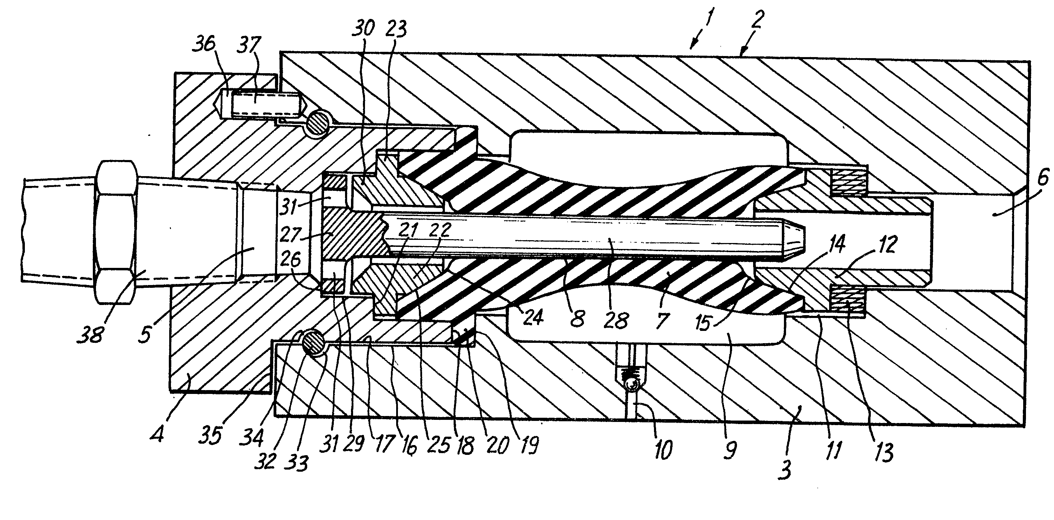

L'invention a plus précisément pour objet des perfectionnements à une vanne de commande et/ou de sûreté pour une canalisation et/ou circuit d'un fluide principal gazeux ou hydraulique décrite dans FR-E-93 020 (voir figure 4), addition au FR-A-1 513 484 comme comportant un boîtier, muni d'un orifice d'entrée et d'un orifice de sortie entre lesquels est disposé un organe obturateur constringent traversé par un conduit de communication entre les orifices d'entrée et de sortie et soumis périphériquement à la pression de commande et/ou tarée d'un fluide auxiliaire gazeux ou hydraulique, et comportant une aiguille pleine pénétrant dans le conduit de communication et constituant renfort rigide pouvant venir sous la pression du fluide auxiliaire surmontant celle du fluide principal, au contact d'au moins une partie de la surface intérieure libre du conduit de l'organe obturateur.

Le but de l'invention est de proposer un dispositif de ce type perfectionné, de sorte que soit considérablement réduite l'usure de l'organe obturateur constringent et supprimées ou réduites les pressions sur son boîtier tendant à créer des efforts longitudinaux nuisibles à l'étanchéité.

Ces buts sont atteints, selon l'invention, dans une vanne du type précédemment décrit, grâce au fait que l'aiguille est montée libre en déplacement longitudinal entre deux butées.

De cette façon, la paroi du conduit, qui est soumise, aux instants d'ouverture et de fermeture à des sollicitations élastiques longitudinales variables ne frotte plus sur la paroi de l'aiguille et son usure s'en trouve grandement réduite ou même supprimée.

Dans un mode de réalisation dans lequel l'aiguille comporte à l'une de ses extrémités, une tête logée dans le boîtier sur le trajet de communication entre l'un des orifices et le conduit, il est conforme à l'invention que, pour le logement de cette tête, le boîtier comporte un évidement en concordance de forme périmétrique sans frottement et présentant, pour cette tête un jeu longitudinal entre ses deux faces vis-à-vis constituant butées de libre déplacement longitudinal de l'aiguille.

Dans le mode de réalisation dans lequel la tête de l'aiguille comporte un passage pour le fluide principal, il est avantageux que ce passage soit constitué par au moins une ouverture de communication directe entre la face de la tête du côté opposé à celui de l'aiguille et l'espace voisin de l'aiguille.

De cette façon on évite toute action parasite à composante transversale sur l'aiguille lors de l'écoulement du fluide principal.

Il est, de plus, avantageux que la tête de l'aiguille soit disposée du côté où est appliquée la pression du fluide principal. De cette façon, l'absence de perte de charge au-delà de la zone d'action de l'organe obturateur donne l'assurance qu'il peut être taré ou commandé avec une grande fiabilité et qu'il n'y a plus de pression interne due au fluide principal créée en aval de la vanne.

D'autres caractéristiques et avantages ressortiront de la description, qui sera donnée ci-après uniquement à titre d'exemple, d'un mode de réalisation de l'invention. On se reportera à cet effet au dessin annexé, dans lequel la figure unique représente une vue en coupe axiale d'une vanne conforme à l'invention.

Une vanne est désignée dans son ensemble par 1. Ainsi qu'on l'exposera plus loin, elle peut être adaptée à volonté soit pour servir de vanne commandée soit de clapet de retenue.

La vanne 1 comporte un boîtier 2 constitué substantiellement par l'assemblage d'un corps creux 3 extérieurement cylindrique et d'un bouchon 4. Le bouchon 4 et l'extrémité opposée du corps creux 3 comportent des orifices alignés, respectivement d'entrée 5 dans le bouchon 4 et de sortie 6 dans le corps creux 3. Le corps creux reçoit un manchon élastique 7 ayant la forme générale d'une bobine à génératrice sensiblement hyperbolique et percée axialement d'un conduit 8 disposé sur l'alignement des orifices 5 et 6. Entre la paroi externe de la bobine et la paroi interne du corps creux 3 est ménagée une chambre étanche annulaire de compression 9 qui peut recevoir, par un conduit à clapet 10, de l'azote sous pression réglable et/ou tarée, par exemple à 600 bars. Pour assurer un montage étanche entre le conduit 8 et la chambre de compression 9, le conduit 8 du manchon 7 s'évase vers ses deux extrémités. Du côté de l'orifice de sortie, l'extrémité du manchon 7 est bridée entre une partie cylindrique 11 de la paroi interne du corps creux 3 et un embout 12 percé axialement monté dans la partie cylindrique 11 avec un joint annulaire 13 et présentant, du côté de l'extrémité voisine du manchon 7, une partie conique 14 en concordance de forme avec la partie évasée 15 du conduit 8.

L'extrémité du corps creux 3 qui reçoit le bouchon 4 est alésée en 16 sur une certaine longueur et le bouchon présente une partie cylindrique 17 sensiblement de même longueur et logeable avec faible jeu dans l'alésage 16. Le perçage central du bouchon 5 est en gradins circulaires. A son extrémité dirigée vers le corps creux 3, le bouchon 5 présente un premier épaulement annulaire plan 18 venant brider conjointement, avec un épaulement annulaire 19 interne du corps creux, un collet 20 entourant solidairement le manchon 7. Un deuxième épaulement 21, en retrait du précédent, reçoit en appui par un collet 23 en embout 22 percé axialement, l'autre face du collet 23 recevant en appui l'extrémité correspondante du manchon 7, dont l'ouverture évasée 24 vient en concordance de forme avec un profil conique 25 convenable de l'embout 22.

Un troisième épaulement 26, en retrait du pré-

cédent, sert de butée pour la tête 27 cylindrique d'une aiguille 28 qui traverse avec jeu le perçage axial de l'embout 22, traverse le conduit 8 et pénètre avec jeu dans le perçage axial de l'embout 12. Il faut noter que l'alésage 29 délimité entre les paliers 21 et 26 a un diamètre adapté, avec léger jeu, au diamètre de la tête 27 de l'aiguille 28 et a une longueur suffisante pour y recevoir une partie 30 de l'embout 22 et la tête 27 tout en laissant à celle-ci un jeu longitudinal, de l'ordre de 5 à 10 mm, suffisant pour qu'elle se positionne librement entre le palier 26 constituant butée gauche sur la figure et la partie 30 de l'embout 22 constituant butée droite sur la figure. La tête 27 est percée de trous de passage longitudinaux 31 faisant communiquer l'orifice d'entrée 5 avec le voisinage de l'aiguille 28. Le diamètre de l'aiguille 28 et le diamètre du conduit 8, non sollicité par une pression interne ou externe, sont sensiblement égaux.

L'assemblage du corps creux 3 et du bouchon 4 se fait par simple encliquetage sur un joint torique élastique 32 pour le logement duquel sont prévues deux gorges semi-circulaires 33 et 34 pouvant venir en coïncidence. Ce mode de montage très simplifié est rendu possible par le fait que le manchon élastique de la vanne de l'invention n'est jamais soumis qu'à des efforts radiaux. Pour éviter au montage, et en service, que le manchon élastique ne soit soumis à des efforts mécaniques de torsion, le bouchon 5 porte un épaulement circulaire 35 d'appui de l'extrémité du corps creux 3 et cet épaulement comporte au moins un perçage 36 pour recevoir un goujon 37 de positionnement et de calage angulaire prisonnier de l'extrémité du corps creux 3 et dirigé vers l'épaulement 35.

On voit que le montage de la vanne est très simple. On introduit axialement dans le corps creux 3 successivement l'embout 12 avec le joint 13, le manchon 7, l'embout 23, l'aiguille 28, on positionne le bouchon 4 grâce au goujon 37 et on encliquette sur le joint torique 32 préalablement placé dans la gorge circulaire 34. Il ne reste plus alors qu'à placer un raccord de canalisation 38 et à raccorder l'orifice 6 à la bâche du circuit hydraulique principal.

Pour constituer la vanne en clapet de sûreté, il suffira de « gonfler » sous pression, par exemple d'azote, la chambre 9 à une pression équilibrant la pression du circuit principal qui s'applique à la jonction de l'aiguille 28 et du conduit 8 tendant à surmonter l'effort exercé extérieurement sur le manchon appliqué contre l'aiguille. Si, pour une autre application, on veut piloter la vanne, la chambre 9 sera mise en communication avec une canalisation d'alimentation pilotée en fluide secondaire de pilotage permettant par constriction ou relâchement du manchon d'ouvrir ou fermer la vanne et même d'en régler la pression de décharge.

## Revendications

1. Vanne de commande et/ou de sûreté pour une canalisation et/ou circuit d'un fluide principal gazeux ou hydraulique comportant un boîtier (2), muni d'un orifice d'entrée (5) et d'un orifice de sortie (6), entre lesquels est disposé un organe obturateur constringent (7) traversé par un conduit (8) de communication entre les orifices d'entrée (5) et de sortie (6) et soumis périphériquement à la pression de commande et/ou tarée d'un fluide auxiliaire gazeux ou hydraulique, et comportant une aiguille pleine (28) pénétrant dans le conduit de communication et constituant renfort rigide pouvant venir sous la pression du fluide auxiliaire surmontant celle du fluide principal, au contact d'au moins une partie de la surface intérieure libre du conduit (8) de l'organe obturateur (7), caractérisée en ce que l'aiguille (28) est montée libre en déplacement longitudinal entre deux butées (26, 30).

2. Vanne selon la revendication 1, dans laquelle l'aiguille (28) comporte, à l'une de ses extrémités, une tête (27) logée dans le boîtier (2) sur le trajet de communication entre l'un des orifices (5) et le conduit (8), caractérisée en ce que, pour le logement de cette tête (27), le boîtier (2) comporte un évidement (29) en concordance de forme périmétrique sans frottement et présentant, pour cette tête (27) un jeu longitudinal entre ses deux faces vis-à-vis constituant butées de libre déplacement longitudinal de l'aiguille (28).

3. Vanne selon la revendication 2, dans laquelle la tête (27) de l'aiguille (28) comporte un passage (31) pour le fluide principal, caractérisée en ce que ce passage (31) est constitué par au moins une ouverture de communication directe entre la face de la tête (27) du côté opposé à celui de l'aiguille (28) et l'espace voisin de l'aiguille.

4. Vanne selon l'une quelconque des revendications 2 et 3, caractérisée en ce que la tête (27) de l'aiguille est disposée du côté où est appliquée la pression du fluide principal.

5. Vanne selon la revendication 1, dans laquelle le boîtier (2) est constitué par deux parties (3, 4) assemblables longitudinalement l'une à l'autre avec ou après mise en place de l'obturateur tubulaire constringent (7) et dans laquelle chacune des deux parties (3, 4) comporte, vis-à-vis l'une de l'autre, un épaulement annulaire (18, 19) de portée pour un collet (20) de l'obturateur (7) qui constitue anneau d'étanchéité, caractérisée en ce qu'elle comporte un moyen (36, 37) de positionnement angulaire préalable et de calage angulaire mutuels des deux parties (3, 4).

6. Vanne selon la revendication 5, caractérisée en ce que les deux parties (3, 4) sont réunies par encliquetage.

## Claims

1. Control and/or safety valve for a pipeline and/or circuit for a main gaseous or hydraulic fluid comprising a housing (2), provided with an inflow orifice (5) and an outflow orifice (6), between which is located a constrictable closing member (7) through which passes a channel (8) for communication between the inflow orifice (5) and outflow orifice (6) and which is subjected peripherally to the control and/or adjusted pressure of an auxiliary gaseous or hydraulic fluid, and having a solid needle (28) penetrating into the communication channel and forming a rigid reinforcement which under the pressure of the auxiliary fluid which exceeds that of the main fluid, can come into contact with at least one portion of the free inner surface of the channel (8) of the closing member (7), characterised in that the needle (28) is mounted so as to be freely displaceable longitudinally between two stops (26, 30).

2. Valve according to claim 1, in which the needle (28) has, at one of its ends, a head (27) accommodated in the housing (2) in the path of communication between one of the orifices (5) and the channel (8), characterised in that, for accommodating this head (27), the housing (2) has a recess (29) whose peripheral shape conforms to this head without friction and having, for this head (27), a longitudinal play between its two opposing faces forming stops for free longitudinal displacement of the needle (28).

3. Valve according to claim 2, in which the head (27) of the needle (28) has a passage (31) for the main fluid, characterised in that this passage (31) consists of at least one orifice for direct communication between the face of the head (27) on the side opposite that of the needle (28) and the space adjacent to the needle.

4. Valve according to either one of claims 2 and 3, characterised in that the head (27) of the needle is located on the same side as that where the pressure of the main fluid is applied.

5. Valve according to claim 1, in which the housing (2) consists of two parts (3, 4) which can be joined longitudinally to one another with or after installation of the constrictable tubular closing member (7) and in which each of the two parts (3, 4) has, opposite one another, an annular bearing shoulder (18, 19) for a collar (20) of the closing member (7) which constitutes a sealing ring, characterised in that it has a means (36, 37) for the prior angular positioning and angular wedging of the two parts (3, 4) relative to one another.

6. Valve according to claim 5, characterised in that the two parts (3, 4) are connected to one another by means of a pawl-and-rachet system.

**Ansprüche**

1. Steuer- und/oder Sicherheitsventil für eine Röhrenleitung und/oder einen Kreislauf eines gasförmigen oder hydraulischen Hauptfluids mit einem Gehäuse (2) mit einer Eintrittsöffnung (5) und einer Austrittsöffnung (6), zwischen welchen ein zusammendrückbares Verschlußteil angeordnet ist, welches mit einer Verbindungsleitung (8) zwischen der Eintrittsöffnung (5) und der Austrittsöffnung (6) versehen ist und welches am Umfang einem Steuerdruck eines gasförmigen oder hydraulischen Hilfsfluids ausgesetzt ist und/oder welches durch dieses Hilfsfluid geeicht ist, und mit einem massiven Stößel (28), der in die Verbindungsleitung eindringt und der eine feste Verstärkung bildet, die dem Druck des Hilfsfluids ausgesetzt sein kann, wenn der Druck des Hilfsfluids den Druck des Hauptfluids übersteigt, und in Kontakt ist mit wenigstens einem Bereich der freien Innenfläche der Leitung (8) des Verschlußteils (7), dadurch gekennzeichnet, daß der Stößel (28) in Längsrichtung frei verschiebbar zwischen zwei Anschlägen (26, 30) angeordnet ist.

2. Ventil nach Anspruch 1, in welchem der Stößel (28) an einem seiner Enden einen Kopf (27) aufweist, welcher in dem Gehäuse (2) auf der Verbindungslinie zwischen einer der Öffnungen (5) und der Leitung (8) angeordnet ist, dadurch gekennzeichnet, daß das Gehäuse (2) zur Aufnahme des Kopfes (27) eine Aussparung (29) aufweist, daß die Umfangsform des Kopfes mit der Form der Aussparung übereinstimmt, so daß keine Reibung auftritt und daß für den Kopf (27) in Längsrichtung Spiel vorgesehen ist zwischen den zwei gegenüberliegenden Seiten, welche Anschläge bilden für die freie Längsverschiebung des Stößels (28).

3. Ventil nach Anspruch 2, in welchem der Kopf (27) des Stößels (28) einen Durchlaß (31) aufweist für das Hauptfluid, dadurch gekennzeichnet, daß der Durchlaß (31) durch wenigstens eine Verbindungsöffnung gebildet ist, welche geradlinig zwischen der Seite des Kopfes (27) von der dem Stößel gegenüberliegenden Seite (28) und dem an den Stößel angrenzenden Raum verläuft.

4. Ventil nach einem der Ansprüche 2 und 3, dadurch gekennzeichnet, daß der Kopf (27) des Stößels (28) auf der Seite angeordnet ist, an der der Druck des Hauptfluids anliegt.

5. Ventil nach Anspruch 1, in welchem das Gehäuse (2) aus zwei Teilen (3, 4) besteht, welche in Längsrichtung zueinander zusammensetzbar sind mit oder nach dem Anordnen des rohrförmigen zusammendrückbaren Verschlußteils (7) und in welchem jedes der zwei Teile (3, 4) einander gegenüberliegend mit einer ringförmigen Tragschulter (18, 19) für einen Kragen (20) des Verschlußteils (7) ausgebildet ist, wobei der Kragen einen Dichtungsring bildet, dadurch gekennzeichnet, daß ein Element (36, 37) zum anfänglichen winkligen Positionieren und zum gegenseitigen winkligen Verkeilen der Teile (3, 4) vorgesehen ist.

6. Ventil nach Anspruch 5, dadurch gekennzeichnet, daß die beiden Teile (3, 4) durch eine Verklinkung verbunden sind.